# EUROPEAN PATENT APPLICATION

(11) **EP 4 478 518 A1**
(43) Date of publication of application: **18.12.2024**
(21) Application number: 23880151.8
(22) Date of filing: 17.10.2023
(51) Int. Cl.: H01M 50/451, H01M 50/446, H01M 50/489, H01M 50/46, H01G 11/52

(54) **SEPARATOR FOR ELECTROCHEMICAL DEVICE, AND ELECTROCHEMICAL DEVICE HAVING SAME**

(30) Priority: 17.10.2022 KR 20220133367; 16.10.2023 KR 20230137518
(71) Applicant: LG Energy Solution, Ltd., Seoul 07335 (KR)
(72) Inventor: YOON, Yeo Ju, Daejeon 34122 (KR); KIM, Seong Jun, Daejeon 34122 (KR); JEONG, So Mi, Daejeon 34122 (KR)
(74) Representative: Hoffmann Eitle
(86) International application number: PCT/KR2023/015977
(87) International publication number: WO 2024/085574

(57) **Abstract**

The present disclosure relates to a separator for an electrochemical device containing a lithium manganese-based active material, including: a porous polymer substrate; and a porous coating layer which is laminated on at least one surface of the porous polymer substrate and contains inorganic particles and a polymer binder, wherein the inorganic particles have a sulfonic acid group introduced on the surface of a metal oxide or metal hydroxide, and at least a portion of the sulfonic acid group has hydrogen cations substituted with lithium cations.

## Description

### [TECHNICAL FIELD]

The present disclosure claims the benefits of the filing date of Korean Patent Application No. 10-2022-0133367 filed with the Korea Intellectual Property Office on October 17, 2022, and the entire contents thereof are included in the present disclosure.

The present disclosure relates to a separator for an electrochemical device and an electrochemical device comprising the same, and to a separator for minimizing capacity loss in an electrochemical device using a lithium manganese-based cathode active material.

### [BACKGROUND ART]

Electrochemical devices convert chemical energy into electrical energy using an electrochemical reaction. Recently, lithium secondary batteries, which have high energy density and voltage, long cycle life, and can be used in various fields, have been widely used.

A lithium secondary battery may include an electrode assembly made of a cathode, an anode, and a separator disposed between the cathode and the anode, and the electrode assembly may be manufactured by being stored in a case together with an electrolyte solution. The cathode can provide lithium ions, and the lithium ions can pass through a separator made of a porous material and move to the anode. The anode that has an electrochemical reaction potential close to that of lithium metal and allows intercalation and deintercalation of lithium ions can be made of a carbon-based active material or the like.

The cathode active material may contain lithium and various metal or transition metal elements. For example, nickel can improve the capacity of electrochemical devices, cobalt can improve the capacity and cycle stability of electrochemical devices, manganese can improve the stability of electrochemical devices, and aluminum can improve the output characteristics of electrochemical devices. However, nickel has low thermal stability, and nickel and cobalt have high prices, so interest in lithium manganese-based cathode active materials containing manganese is increasing recently.

However, in electrochemical devices using a cathode active material containing manganese, manganese ions may be eluted from the cathode during the charging and discharging process. The eluted manganese ions may move to the anode, precipitate as impurities including manganese on the surface of the anode, and form a non-uniform film, causing capacity degradation of the electrochemical device.

Therefore, research is being conducted on, as a separator for use in an electrochemical device containing a lithium manganese-based active material, separators that can prevent deterioration of the anode and the electrochemical device including the same by capturing manganese ions eluted from the cathode and preventing them from moving to the anode.

### [DETAILED DESCRIPTION OF INVENTION]

### [TECHNICAL PROBLEMS]

An object of the present disclosure is to provide, as a separator for use in an electrochemical device containing a lithium manganese-based active material, a separator for an electrochemical device, which is capable of adsorbing manganese ions eluted from a cathode.

### [TECHNICAL SOLUTION]

One aspect of the present disclosure provides a separator for an electrochemical device containing a lithium manganese-based active material, including a porous polymer substrate, and a porous coating layer which is laminated on at least one surface of the porous polymer substrate and contains inorganic particles and a polymer binder, wherein the inorganic particles have a sulfonic acid group introduced on the surface of a metal oxide or metal hydroxide, and at least a portion of the sulfonic acid group has hydrogen cations substituted with lithium cations.

The porous coating layer further contains second inorganic particles that are a metal oxide or metal hydroxide included in the inorganic particles, and may contain the inorganic particles and the second inorganic particles at a weight ratio of 80:20 to 70:30.

The sulfonic acid group may be one or more selected from the group consisting of methane sulfonic acid, ethane sulfonic acid, trifluoromethanesulfonic acid, benzene sulfonic acid, p-toluene sulfonic acid, naphthalene sulfonic acid, phenylbenzimidazole sulfonic acid, and 2-acrylamido-2-methylpropanesulfonic acid.

The metal oxide or the metal hydroxide may be one or more selected from the group consisting of HfO₂, Sb₂O₃, Sb₂O₄, Sb₂O₅, SrTiO₃, SnO₂, CeO₂, MgO, Mg(OH)₂, NiO, CaO, ZnO, Zn₂SnO₄, ZnSnO₃, ZnSn(OH)₆, ZrO₂, Y₂O₃, SiO₂, Al₂O₃, AlOOH, Al(OH)₃, and TiO₂.

The polymer binder is a non-aqueous polymer binder, and may form an interstitial volume formed by the gap between the inorganic particles by binding the inorganic particles to each other.

The non-aqueous polymer binder may be one or more selected from the group consisting of polyethylene oxide (PEO), polyvinylidene fluoride (PVdF), poly(vinylidene fluoride-co-hexafluoropropylene) (PVdF-co-HFP), and N,N'-bis[3-(triethoxysilyl)propyl]urea.

The lithium manganese-based active material may be one or more cathode active materials selected from the group consisting of Li₁₊ₓMn₂₋ₓO₄ (0≤x≤0.33), LiMnO₃, LiMn₂O₃, LiMnO₂, LiNi₁₋ₓMnₓO₂ (0.01≤x≤0.3), LiMn₂₋ₓMₓO₂ (M=Co, Ni, Fe, Cr, Zn, or Ta, and 0.01≤x≤0.1), Li₂Mn₃MO₈ (M=Fe, Co, Ni, Cu, or Zn), LiNiₓMn₂₋ₓO₄ (0<x<0.5), and LiMn₂O₄.

The porous coating layer may have a thickness of 1 to 6 µm.

The separator for an electrochemical device may have an adsorption rate of manganese ions eluted from the cathode containing the lithium manganese-based active material of 15 to 30%.

Another aspect of the present disclosure provides an electrochemical device including a cathode, an anode, and a separator disposed between the cathode and the anode, wherein the separator may be the separator for an electrochemical device according to one aspect of the present disclosure.

The electrochemical device may be a lithium secondary battery.

### [EFFECT OF INVENTION]

The separator for an electrochemical device according to the present disclosure introduces a sulfonic acid group on the surface of inorganic particles contained in the porous coating layer, and substitutes hydrogen cations contained in at least a portion of the sulfonic acid group with lithium cations, thereby providing improved manganese ion adsorption capacity compared to the prior art.

### [BEST MODE FOR CARRYING OUT THE INVENTION]

Hereinafter, each configuration of the present disclosure will be described in more detail so that those skilled in the art to which the present disclosure pertains can easily implement it. However, this is only an example, and the scope of rights of the present disclosure is not limited by the following contents.

The term "including" used in this specification is used to list materials, compositions, devices, and methods useful in the present disclosure and is not limited to the listed examples.

The terms "about" and "substantially" used in this specification are used to mean a range of the values or degrees or approximations thereof by taking into account unique manufacturing and material tolerances, and are used to prevent infringers from unfairly using the disclosed contents in which precise or absolute values provided to aid understanding of the present disclosure are mentioned.

The term "electrochemical device" used in this specification may mean a primary battery, secondary battery, super capacitor, or the like.

The term "particle diameter" used in this specification means D50, which is the particle diameter corresponding to 50% of the cumulative distribution of particle numbers according to particle diameter unless otherwise specified.

One embodiment of the present disclosure provides a separator for an electrochemical device, including a porous polymer substrate and a porous coating layer containing inorganic particles and a polymer binder. The inorganic particles are those in which a sulfonic acid group is introduced to the surface of a metal oxide or metal hydroxide, and at least a portion of the sulfonic acid group has hydrogen cations substituted with lithium cations, and the electrochemical device contains a lithium manganese-based active material.

The porous polymer substrate provides pores through which lithium ions can pass while preventing short circuits by electrically insulating the cathode and anode. The porous polymer substrate may have resistance to an electrolyte solution of the electrochemical device, which is an organic solvent. For example, the porous polymer substrate may include polymer resins such as polyolefins such as polyethylene, polypropylene, and polybutene, polyvinyl chloride, polyethylene terephthalate, polycycloolefin, polyethersulfone, polyamide, polyimide, polyimideamide, polyaramide, nylon, polytetrafluoroethylene, copolymers or mixtures thereof, etc., but the present disclosure is not limited thereto. Preferably, the porous polymer substrate may have excellent slurry applicability for forming a porous coating layer and may be advantageous for manufacturing a thin-thickness separator by including a polyolefin-based polymer.

The porous polymer substrate may have a thickness of 1 to 100 µm, preferably 1 to 30 µm, and more preferably 15 to 30 µm. The porous polymer substrate may contain pores with an average diameter of 0.01 to 10 µm.

A slurry may be applied and dried on at least one surface of the porous polymer substrate to form a porous coating layer, which will be described later. The slurry may contain inorganic particles, a polymer binder, a dispersion medium, etc. Before applying the slurry, surface treatment such as plasma treatment or corona discharge may be performed on the porous polymer substrate in order to improve impregnation properties with respect to the electrolyte solution.

The separator for an electrochemical device may include the porous polymer substrate and a porous coating layer. The porous coating layer may be formed or laminated on at least one surface of the porous polymer substrate, and preferably may be formed on both surfaces thereof.

The porous coating layer may contain inorganic particles for improving the mechanical properties and insulation properties of the porous polymer substrate and a polymer binder for improving adhesive force between the electrode and the separator. The polymer binder may provide adhesive force between the electrode and the separator, and at the same time, may bond adjacent inorganic particles and maintain the bond. The inorganic particles may combine with adjacent inorganic particles to provide an interstitial volume, which is a void between the inorganic particles, and lithium ions may move through the interstitial volume.

The inorganic particles may form a uniform thickness of the porous coating layer and may not cause a redox reaction within the operating voltage range of an electrochemical device applied. Specifically, the inorganic particles may have a sulfonic acid group (HSO₃) introduced on their surfaces, and may be a metal oxide or metal hydroxide in which the hydroxy group exists on the surface of the inorganic particles before the introduction of the sulfonic acid group. The inorganic particles among these may be those having one or more properties of piezoelectricity and flame retardancy.

Inorganic particles with piezoelectricity mean materials that are nonconductors at normal pressure but have the physical properties allowing electricity to pass through due to changes in their internal structure when a certain pressure is applied. The inorganic particles may exhibit high dielectric constant characteristics with a dielectric constant of 100 or more, and when a certain pressure is applied and stretched or compressed, an electric charge may be generated so that one surface is positively charged and the other surface is negatively charged, respectively, thereby having a function of generating a potential difference between both surfaces. When an internal short circuit occurs between the cathode and the anode due to external impacts such as local crush, nail, or the like in the inorganic particles as described above, not only the cathode and the anode are prevented from coming into direct contact due to the inorganic particles coated on the separator, but also a potential difference occurs within the particles due to the piezoelectricity of the inorganic particles. Due to this, electron movement is made between the cathode and the anode, that is, a minute flow of current so that the voltage of the electrochemical device may be gradually reduced and improvement in the safety may be sought accordingly.

For example, the inorganic particles with piezoelectricity may be HfO₂ (hafnia), but the present disclosure is not limited thereto.

The inorganic particles with flame retardancy may add flame retardant properties to the separator or prevent the temperature inside the electrochemical device from rapidly rising.

For example, the inorganic particles with flame retardancy may be one or more selected from the group consisting of Sb₂O₃, Sb₂O₄, Sb₂O₅, SrTiO₃, SnO₂, CeO₂, MgO, Mg(OH)₂, NiO, CaO, ZnO, Zn₂SnO₄, ZnSnO₃, ZnSn(OH)₆, ZrO₂, Y₂O₃, SiO₂, Al₂O₃, AlOOH, Al(OH)₃, TiO₂, and mixtures thereof, but the present disclosure is not limited thereto. Preferably, the inorganic particles may be AlOOH or Al(OH)₃.

The sulfonic acid group may be one or more selected from the group consisting of methane sulfonic acid, ethane sulfonic acid, trifluoromethanesulfonic acid, benzene sulfonic acid, p-toluene sulfonic acid, naphthalene sulfonic acid, phenylbenzimidazole sulfonic acid, and 2-acrylamido-2-methylpropanesulfonic acid.

An attractive force may act between the oxygen atom having rich electrons as the hydrogen cations are separated from the sulfonic acid group introduced into the inorganic particles and the manganese ions, thereby giving the inorganic particles the manganese ion adsorption capacity.

At least a portion of the sulfonic acid group may have hydrogen cations substituted with lithium cations. Substitution of the lithium cations may be accomplished by adding lithium hydroxide to the dispersion of the inorganic particles into which the sulfonic acid group is introduced and stirring it. For example, hydrogen cations contained in 50 to 100% of the sulfonic acid group present in the inorganic particles may be substituted with lithium cations, but the present disclosure is not limited thereto. The lithium cations may be easily separated from the inorganic particles compared to the hydrogen cations, thereby improving the manganese ion adsorption capacity of the inorganic particles. In addition, lithium ion conductivity in the electrochemical device may be improved due to lithium cations separated from the inorganic particles, thereby seeking improvement in the performance of the electrochemical device due to this.

The inorganic particles have a sulfonic acid group introduced to the surface of the inorganic particles, and the hydrogen cations of at least a portion of the sulfonic acid group are substituted with lithium cations, and the inorganic particles may have an average particle diameter of 50 to 5000 nm, preferably 200 to 1000 nm, and more preferably 300 to 700 nm. If the average particle diameter of the inorganic particles is less than 50 nm, an additional polymer binder is required for bonding between the inorganic particles, which is disadvantageous in terms of electrical resistance. If the average particle diameter of the inorganic particles exceeds 5000 nm, the uniformity of the surface of the coating layer may decrease, and the separator and electrode may be damaged during lamination by the particles protruded after coating, resulting in a short circuit. The inorganic particles may have a specific surface area of 5 to 10 m²/g.

The porous coating layer may further contain second inorganic particles that are a metal oxide or metal hydroxide contained in the inorganic particles. Preferably, the second inorganic particles may be a metal oxide or metal hydroxide contained in the inorganic particles, but may not have a sulfonic acid group introduced into their surfaces. For example, the porous coating layer may contain AlOOH (boehmite) as the second inorganic particles, and may contain those in which a sulfonic acid group is introduced to the surface of the boehmite as the inorganic particles, and at least some of the hydrogen cations of the sulfonic acid group are substituted with lithium cations.

The porous coating layer may contain both the inorganic particles and the second inorganic particles, and thus improve the mechanical properties of the porous polymer substrate and provide manganese ion adsorption capacity at the same time. Specifically, the porous coating layer may contain the inorganic particles and the second inorganic particles at a weight ratio of 80:20 to 70:30. If the inorganic particles are contained in an excessive amount compared to the above ratio, thermal shrinkage of the separator may occur due to a decrease in thermal stability. If the second inorganic particles are contained in an excessive amount compared to the above ratio, the specific surface area of the porous coating layer decreases rapidly, and the adsorption capacity for manganese ions decreases at a rate greater than the decrease in the specific surface area. In a porous coating layer that satisfies the above ratio, the total inorganic particles including the inorganic particles and the second inorganic particles may have an average specific surface area of 5.5 to 6.5 m²/g.

The porous coating layer may contain a non-aqueous polymer binder as a polymer binder. The non-aqueous polymer binder may have a weight average molecular weight of 10,000 to 10,000,000. For example, the non-aqueous polymer binder may be one or more selected from the group consisting of polyethylene oxide (PEO), polyvinylidene fluoride (PVdF), poly(vinylidene fluoride-co-hexafluoropropylene) (PVdF-co-HFP), and N,N'-bis[3-(triethoxysilyl)propyl]urea.

For example, the porous coating layer may contain poly(vinylidene fluoride-co-hexafluoropropylene) as a non-aqueous polymer binder, and the non-aqueous polymer binder may bind the inorganic particles to each other to form an interstitial volume formed of a gap between the inorganic particles. When the porous coating layer further contains second inorganic particles, the non-aqueous polymer binder may bind the inorganic particles to each other, the second inorganic particles to each other, and the inorganic particles and the second inorganic particles to form an interstitial volume formed of a gap between the inorganic particles.

The porous coating layer may have a thickness of 1 to 6 µm. If the thickness of the porous coating layer is less than 1 µm, a problem occurs in which impurities including manganese are precipitated at the anode. Even if the thickness of the coating layer exceeds 6 µm, the manganese ion adsorption efficiency does not significantly increase. Preferably, the porous coating layer may have a thickness of 3 to 5 µm.

Both surfaces of the porous polymer substrate may be disposed to face an anode and a cathode which contains a lithium manganese-based active material, respectively. Preferably, a porous coating layer may be formed on both surfaces of the porous polymer substrate, and the porous coating layer may delay or reduce precipitation of impurities on the anode surface of the electrochemical device. More preferably, the porous coating layer may contain the same type of inorganic particles, and the porous coating layer may be formed by dip coating the porous polymer substrate with a slurry containing the inorganic particles.

The porous coating layer may further contain a dispersant in order to further improve the dispersibility of the inorganic particles. The dispersant functions to allow inorganic particles to maintain a uniform dispersion state within the polymer binder during slurry preparation. For example, the dispersant may use a cyano resin such as cyanoethyl pullulan, cyanoethyl cellulose, or the like. When the slurry contains a dispersant, the porous coating layer may contain 5% by weight or less of the dispersant.

The slurry may contain inorganic particles and a polymer binder at a weight ratio of 90: 10 to 10:90, preferably 80:20 to 20:80. If it is outside the above range, the movement of the polymer binder in the porous coating layer may be hindered to make it impossible to secure sufficient adhesive force between the electrode and the separator.

Another embodiment of the present disclosure provides an electrochemical device including a cathode, an anode, and a separator disposed between the cathode and the anode, wherein the separator is the above-described separator for an electrochemical device according to one embodiment. For example, the electrochemical device may be a lithium secondary battery including a cathode containing a lithium manganese-based cathode active material.

The cathode and the anode may be ones formed by applying and drying an active material on at least one surface of each current collector. The current collector may include a material that has conductivity without causing chemical changes in the electrochemical device. For example, a current collector for a cathode may include aluminum, nickel, titanium, fired carbon, and stainless steel; and a surface of aluminum or stainless steel surface-treated with carbon, nickel, titanium, silver, etc., but the present disclosure is not limited thereto. For example, a current collector for an anode may include copper, nickel, titanium, fired carbon, and stainless steel; and a surface of copper or stainless steel surface-treated with carbon, nickel, titanium, silver, etc., but the present disclosure is not limited thereto. The current collectors may be in various forms such as a thin metal plate, film, foil, net, porous body, or foam.

The lithium manganese-based cathode active material may not include nickel and cobalt, or may include only one of nickel and cobalt. For example, the lithium manganese-based cathode active material may be one or more selected from the group consisting of Li₁₊ₓMn₂₋ₓO₄ (0≤x≤0.33), LiMnO₃, LiMn₂O₃, LiMnO₂, LiNi₁₋ₓMnₓO₂ (0.01≤x≤0.3), LiMn₂₋ₓMxO₂ (M=Co, Ni, Fe, Cr, Zn, or Ta, and 0.01<x<0.1), Li₂Mn₃MO₈ (M=Fe, Co, Ni, Cu, or Zn), LiNiₓMn₂₋ₓO₄ (0<x<0.5), and LiMn₂O₄. Preferably, the lithium manganese-based cathode active material may be an LMO-based active material containing only lithium and manganese.

An anode active material may include: carbon such as non-graphitized carbon, graphitic carbon, etc.; metal complex oxides such as LiₓFe₂O₃ (0≤x≤1), LiₓWO₂ (0≤x≤1), and SnₓMe₁₋ₓMe'_{y}O_{z} (Me: Mn, Fe, Pb, and Ge; Me': Al, B, P, Si, elements of Group 1, Group 2, and Group 3 of the periodic table, and halogen; 0<x≤1; 1≤y≤3; and 1≤z≤8); lithium metal; lithium alloys; silicon-based alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; conductive polymers such as polyacetylene; Li-Co-Ni based materials; etc., but the present disclosure is not limited thereto.

The electrochemical device may include a separator with the porous coating layer disposed on both surfaces, and thus the adsorption rate of manganese ions eluted from the cathode containing the lithium manganese-based active material may be 15 to 30%. Within the above range, precipitation of impurities containing manganese in the anode may be delayed or reduced.

The electrochemical device can be manufactured by inserting the cathode, anode, separator, and electrolyte solution into a case or pouch and sealing it. The shape of the case or pouch is not limited. For example, the electrochemical device may be a cylindrical, prismatic, coin-shaped, or pouch-shaped lithium secondary battery.

The lithium secondary battery is packaged or modularized as a unit cell so that it may be used in small devices such as computers, mobile phones, and power tools, and power tools that are powered by an electric motor and moved; electric cars including electric vehicles (EVs), hybrid electric vehicles (HEVs), plug-in hybrid electric vehicles (PHEVs), etc.; electric two-wheeled vehicles including electric bicycles (E-bikes) and electric scooters (E-scooters); electric golf carts; and medium to large-sized devices such as power storage systems.

Hereinafter, the present disclosure will be described in more detail through specific Examples and Experimental Examples. The following Examples and Experimental Examples are intended to illustrate the present disclosure, and the present disclosure is not limited by the following Examples and Experimental Examples.

### Example 1

### Preparation of slurry

5 g of boehmite (Nabaltec, D50 of 0.213 *µ*m) was added to 200 mL of dichloromethane and dispersed using ultrasonic waves for 20 minutes. 2 mL of chlorosulfonic acid was added to 50 mL of dichloromethane, and then added dropwise to the boehmite dispersion over 2 hours. After the addition was complete, the mixture was stirred at room temperature for 15 hours and centrifuged to obtain a solid. The solid was washed with dichloromethane five times or more and dried under vacuum at room temperature to obtain boehmite particles into which a sulfonic acid group was introduced. The boehmite particles into which the sulfonic acid group was introduced were added to a solution in which 25 g of LiOH·H₂O was dissolved in 500 mL of distilled water, and stirred for 12 hours. Inorganic particles were prepared by substituting hydrogen contained in a portion of the sulfonic acid group with lithium.

100 mL of N-methylpyrrolidone (NMP) was prepared as a non-aqueous dispersion medium at room temperature (25°C). A slurry for forming an organic/inorganic composite porous coating layer was prepared by dispersing polyvinylidene fluoride (Solvay) as a polymer binder and a dispersant (Miwon Corporation) in the non-aqueous dispersion medium at a weight ratio of 10:1. 20 g of the inorganic particles were added to the slurry and stirred for 120 minutes to prepare a slurry in which the polymer binder and the inorganic particles were dispersed.

### Preparation of porous polymer substrate

A polypropylene film (PP) with a thickness of about 9 µm was used as a porous polymer substrate.

### Manufacturing of separator

A polypropylene film was dip coated in the slurry and dried to form a porous coating layer with a thickness of each coating of 3 µm on both surfaces of the film, thereby manufacturing a separator with a total thickness of about 15 µm.

### Example 2

A separator was manufactured in the same manner as in Example 1 except that particles in which a sulfonic acid group was introduced to the surface of aluminum hydroxide, and hydrogen contained in a portion of the sulfonic acid group was substituted with lithium were used as inorganic particles when preparing the slurry.

### Example 3

A separator was manufactured in the same manner as Example 1 except that lithium-substituted boehmite into which a sulfonic acid group was introduced and surface-untreated boehmite (second inorganic particles) were added at a weight ratio of 80:20 as inorganic particles when preparing the slurry.

### Example 4

A separator was manufactured in the same manner as Example 1 except that lithium-substituted boehmite into which a sulfonic acid group was introduced and surface-untreated boehmite (second inorganic particles) were added at a weight ratio of 70:30 as inorganic particles when preparing the slurry.

### Comparative Example 1

A separator was manufactured in the same manner as in Example 1 except that surface-untreated boehmite was used as inorganic particles when preparing the slurry.

### Comparative Example 2

A separator was manufactured in the same manner as in Example 2 except that surface-untreated aluminum hydroxide was used as inorganic particles when preparing the slurry.

### Comparative Example 3

A separator was manufactured in the same manner as Example 1 except that lithium-substituted boehmite into which a sulfonic acid group was introduced and surface-untreated boehmite (second inorganic particles) were added at a weight ratio of 60:40 as inorganic particles when preparing the slurry.

### Experimental Example 1. Confirmation of physical properties of separator

The thicknesses of the separators according to Examples 1 to 4 and Comparative Examples 1 to 3 and the porous coating layer of each separator were checked with a thickness gauge (Mitutoyo, VL-50S-B), and the average specific surface areas of the inorganic particles contained in the porous coating layer in each separator were measured and shown in Table 1 below.

**[Table 1]**

| | Fabric | Porous coating layer | | | Thickness of separator (µm) | Thickness of porous coating layer (µm/µm) | Average specific surface area of inorganic particles in porous coating layer (m²/g) |
|---|---|---|---|---|---|---|---|
| | | Type of inorganic particles | Whether inorganic particles are surface-treated or not (+SO₃-Li) | Weight ratio of inorganic particles to second inorganic particles | | | |
| Example 1 | PP | AlOOH | ○ | - | 15.1 | 3/3 | 5.71 |
| eExample 2 | PP | Al(OH)₃ | ○ | - | 15.4 | 3/3 | 6.03 |
| Example 3 | PP | AlOOH | ○ | 80:20 | 15.2 | 3/3 | 5.76 |
| Example 4 | PP | AlOOH | ○ | 70:30 | 15.3 | 3/3 | 5.68 |
| Comparative Example 1 | PP | AlOOH | × | | 15.3 | 3/3 | 5.92 |
| Comparative Example 2 | PP | Al(OH)₃ | × | | 15.2 | 3/3 | 6.72 |
| Comparative Example 3 | PP | AlOOH | ○ | 60:40 | 15.4 | 3/3 | 5.72 |

### Experimental Example 2. Confirmation of manganese ion adsorption performance of separator

The separators according to Examples 1 to 4 and Comparative Examples 1 to 3 were respectively completely immersed in a manganese sulfate solution (MnSO₄) (initial Mn²⁺ concentration of 3,400 ppm) and maintained for 24 hours, and then the separators were recovered and dried. The dried separators were analyzed by EDS (JEOL's SEM, 15kV), and are shown in Table 2 below.

In addition, after recovering the separators, the concentrations of Mn²⁺ ions remaining in the manganese sulfate solution were measured to show the Mn²⁺ adsorption amount for each separator in Table 2 below.

**[Table 2]**

| | EDS mapping results (Ratio of Mn²⁺ ions, %) | Mn²⁺ ion adsorption amount of separator (ppm) | Mn²⁺ ion adsorption rate (%) |
|---|---|---|---|
| Example 1 | 1.58 | 548 | 16.11 |
| Example 2 | 2.14 | 761 | 22.38 |
| Example 3 | 1.37 | 385 | 11.32 |
| Example 4 | 1.09 | 258 | 7.59 |
| Comparative Example 1 | 0.27 | 0 | 0 |
| Comparative Example 2 | 0.29 | 0 | 0 |
| Comparative Example 3 | 0.77 | 0 | 0 |

### Experimental Example 3. Confirmation of cycle characteristics in electrochemical devices containing lithium manganese-based active material

After lithium manganese-based composite oxide (LiMnO₂), a conductive material (Denka black), and a binder (PVdF) were weighed so that weights thereof were at a weight ratio of 95:2.5:2.5, N-methylpyrrolidone (NMP) was added thereto and mixing was performed to prepare a cathode active material slurry, and the cathode active material slurry was coated to a thickness of 200 µm on a 20 µm thick aluminum foil, and then rolled and dried to manufacture a cathode.

A Li metal plate with a thickness of 200 µm was used as an anode, and the cathode and anode were stacked with the separators of Example or Comparative Examples being interposed therebetween, and then inserted into aluminum pouches.

Cells were manufactured by injecting 1 g of an electrolyte solution containing 3 mol of vinylene carbonate (VC), 1.5 mol of propane sultone (PS), 1 mol of ethylene sulfate (ESa), and 1 mol of lithium salt LiPF₆ as additives into a solvent in which ethylene carbonate (EC) and ethyl methyl carbonate (EMC) were mixed at a weight ratio of 3:7 in the aluminum pouches, and sealing the pouches.

The manufactured cells were charged and discharged once at 0.1 C in a voltage range of 3.0 V to 4.35 V in a 25°C chamber, and performance retention rates were confirmed while repeating 0.33 C charging and 0.33 C discharging 400 times. The performance retention rates were calculated as the ratios of the discharge capacities after repeating 400 cycles compared to the initial discharge capacity.

In addition, the resistances before and after the 400 cycles were measured to confirm the resistance increase rates.

**[Table 3]**

| | Cell performance retention rate (%) after 400 cycles | Resistance increase rate (%) after 400 cycles |
|---|---|---|
| Example 1 | 85.7 | 7.12 |
| Example 2 | 87.5 | 6.42 |
| Example 3 | 80.4 | 23.40 |
| Example 4 | 79.8 | 32.40 |
| Comparative Example 1 | 70.4 | 36.81 |
| Comparative Example 2 | 70.2 | 38.42 |
| Comparative Example 3 | 71.4 | 39.12 |

## Claims

1. A separator for an electrochemical device containing a lithium manganese-based active material, comprising:
a porous polymer substrate; and
a porous coating layer which is laminated on at least one surface of the porous polymer substrate and contains inorganic particles and a polymer binder,
wherein the inorganic particles have a sulfonic acid group introduced on the surface of a metal oxide or metal hydroxide, and at least a portion of the sulfonic acid group has hydrogen cations substituted with lithium cations.

2. The separator for an electrochemical device of claim 1, wherein the porous coating layer further contains second inorganic particles that are a metal oxide or metal hydroxide included in the inorganic particles, and contains the inorganic particles and the second inorganic particles at a weight ratio of 80:20 to 70:30.

3. The separator for an electrochemical device of claim 1, wherein the sulfonic acid group is one or more selected from the group consisting of methane sulfonic acid, ethane sulfonic acid, trifluoromethanesulfonic acid, benzene sulfonic acid, p-toluene sulfonic acid, naphthalene sulfonic acid, phenylbenzimidazole sulfonic acid, and 2-acrylamido-2-methylpropanesulfonic acid.

4. The separator for an electrochemical device of claim 1, wherein the metal oxide or the metal hydroxide is one or more selected from the group consisting of HfO₂, Sb₂O₃, Sb₂O₄, Sb₂O₅, SrTiO₃, SnO₂, CeO₂, MgO, Mg(OH)₂, NiO, CaO, ZnO, Zn₂SnO₄, ZnSnO₃, ZnSn(OH)₆, ZrO₂, Y₂O₃, SiO₂, Al₂O₃, AlOOH, Al(OH)₃, and TiO₂.

5. The separator for an electrochemical device of claim 1, wherein the polymer binder is a non-aqueous polymer binder, and forms an interstitial volume formed by the gap between the inorganic particles by binding the inorganic particles to each other.

6. The separator for an electrochemical device of claim 5, wherein the non-aqueous polymer binder is one or more selected from the group consisting of polyethylene oxide, polyvinylidene fluoride, poly(vinylidene fluoride-co-hexafluoropropylene), and N,N'-bis[3-(triethoxysilyl)propyl]urea.

7. The separator for an electrochemical device of claim 1, wherein the lithium manganese-based active material is one or more cathode active materials selected from the group consisting of Li₁₊ₓMn₂₋ₓO₄, 0≤x≤0.33; LiMnO₃; LiMn₂O₃; LiMnO₂; LiNi₁₋ₓMnₓO₂,0.01≤x≤0.3; LiMn₂₋ₓMₓO₂, M=Co, Ni, Fe, Cr, Zn, or Ta, and 0.01<x<0.1; Li₂Mn₃MO₈, M=Fe, Co, Ni, Cu, or Zn; LiNiₓMn₂₋ₓO₄, 0<x<0.5; and LiMn₂O₄.

8. The separator for an electrochemical device of claim 1, wherein the porous coating layer has a thickness of 1 to 6 µm.

9. The separator for an electrochemical device of claim 1, having an adsorption rate of manganese ions eluted from the cathode containing the lithium manganese-based active material of 15 to 30%.

10. An electrochemical device comprising a cathode, an anode, and a separator disposed between the cathode and the anode, wherein the separator is the separator for an electrochemical device according to any one of claims 1 to 9.
